(19) Europäisches Patentamt
European Patent Office
Office européen des brevets

(11) EP 0 552 084 B1

(12) **FASCICULE DE BREVET EUROPEEN**

(45) Date de publication et mention
de la délivrance du brevet:
**21.11.2001 Bulletin 2001/47**

(51) Int Cl.[7]: **A01N 37/40**
// (A01N37/40, 25:02, 47:12, 43:40, 47:16, 37:22, 57:16, 53:00, 43:84)

(21) Numéro de dépôt: **93400048.0**

(22) Date de dépôt: **11.01.1993**

(54) **Compositions phytosanitaires comprenant en combinaison un oxynil et au moins une substance liquide à température ambiante et procédé pour leur mise en oeuvre**

Pflanzenschutzmittel enthaltend ein Oxynil und mindestens eine Verbindung, die flüssig bei Umgebungstemperatur ist und Verfahren zu ihrer Verwendung

Phytosanitary compositions comprising a combination of an oxynil and at least one substance which is liquid at ambient temperature, and method of use

(84) Etats contractants désignés:
**BE DE DK ES FR GB IT**

(30) Priorité: **13.01.1992 FR 9200267**

(43) Date de publication de la demande:
**21.07.1993 Bulletin 1993/29**

(73) Titulaire: **CFPI NUFARM**
**92233 Gennevilliers (FR)**

(72) Inventeurs:
• **Schapira, Joseph**
**F-75015 Paris (FR)**
• **Pecheur, Jacques**
**F-92400 Courbevoie (FR)**
• **Ambrosi, Dominique**
**F-92400 Courbevoie (FR)**

(74) Mandataire: **Koch, Gustave et al**
**Cabinet PLASSERAUD**
**84, rue d'Amsterdam**
**75440 Paris Cédex 09 (FR)**

(56) Documents cités:
EP-A- 0 024 841    EP-A- 0 031 684
EP-A- 0 064 478    EP-A- 0 210 818
EP-A- 0 219 143    EP-A- 0 228 943
EP-A- 0 229 558    EP-A- 0 432 061
FR-A- 2 556 933

• CHEMICAL PATENTS INDEX, DOCUMENTATION ABSTRACTS JOURNAL Section Ch, Week 9105, 3 Avril 1991 Derwent Publications Ltd., London, GB; Class C, AN 037005
• COMPTE RENDU 11èME CONFéRENCE COLUMA vol. 2, 1981, FRANCE pages 434 - 440 N.SARPE ET. AL. 'Efficacité des herbicides Bentazon, Bromoxynil-K/MCPA, Fluazifop-butyl et Metolachlore dans la lutte contre les mauvaises herbes mono et dicotyledones dans la culture du lin du delta du Danube.'
• PROC. NORTHEAST. WEED CONTR. CONF. vol. 22, Janvier 1968, USA pages 294 - 298 H.P.WILSON ET. AL. 'The Effects of two phytobland oils on the postemergence activity of Bromoxynil and DNBP applied in two spray volumes in Alfalfa.'
• DATABASE WPI, semaine 7828, Derwent Publications Ltd., Londres, GB, Classe , AN 78-50598A [28] & JP 53062828 A

Remarques:
Le dossier contient des informations techniques présentées postérieurement au dépôt de la demande et ne figurant pas dans le présent fascicule.

**Description**

L'invention a pour objet des compositions phytosanitaires herbicides liquides du genre de celles comprenant un oxynil et au moins une substance liquide à température ambiante.

Elle vise également un procédé pour la mise en oeuvre des susdites compositions.

Par oxynil, on désigne indifféremment parmi les hydroxybenzonitriles, le 4-hydroxy-3,5-dibromobenzonitrile ou bromoxynil, ou le 4-hydroxy-3,5-diiodobenzonitrile ou ioxynil, ainsi que leurs sels et Leurs esters.

On connaît, par le document EP-A-24 841, des compositions phytosanitaires exempts d'oxynil mais comportant du thiobencarb et l'un des produits du groupe comprenant la triétazine, la prométryne, le triallate, le métoxuron, le néburon, le nitrofène et le chlométhoxynil.

On connaît également des compositions phytosanitaires comprenant des oxynils.

Ainsi,

- le compte-rendu de la 11ème conférence Columa, vol.2, 1981, France, pages 434-440, N.Sarpe et al., décrit l'efficacité des herbicides bentazon, bromoxynil-K/MCPA, fluazifop-butyl et métolachlore dans la lutte contre les mauvaises herbes mono- et dicotylédones dans la culture du lin du delta du Danube et
- le document JP-A-53-062 828 décrit des compositions phytosanitaires comprenant un oxynil et des S-benzyl-thiolcarbamates dans un rapport S-benzyl-thiolcarbamates/ ioxynil supérieur à 2,5.

Or, la Société Demanderesse a mis au point, à l'issue d'études approfondies, une composition phytosanitaire herbicide liquide caractérisée par le fait qu'elle comprend en combinaison un oxynil et au moins une substance choisie parmi les herbicides du groupe comprenant les S-alkyl- et les S-benzyl-thiolcarbamates, cette substance étant liquide à température ambiante, étant entendu que, dans le cas où ladite substance est un S-benzyl-thiolcarbamate choisi dans le groupe comprenant le thiobencarbe, l'orbencarbe, le thiocarbazil, le prosulfocarbe et l'esprocarbe, le rapport S-benzyl-thiolcarbamate/ioxynil est inférieur à 2,5.

Et elle a constaté que, dans le cas de cette composition phytosanitaire qui comprend en combinaison un oxynil, utilisé à une dose à laquelle, seul, il est faiblement actif voire inefficace, et au moins l'une des substances liquides à température ambiante définies ci-dessus, il se produit, de façon surprenante et inattendue, une synergie entre l'oxynil et la substance liquide à température ambiante.

Non seulement l'effet herbicide de l'oxynil est potentialisé mais il peut même être complété par l'activité propre de l'autre herbicide utilisé en tant que substance liquide à température ambiante. Le spectre d'activité de la composition herbicide conforme à l'invention peut par conséquent se trouver élargi et un traitement herbicide complet de ce type peut donc être mis en oeuvre en une seule fois sur la culture à traiter.

Par l'expression "substance liquide à température ambiante", on précise que la substance a un point de fusion inférieur ou égal à 30°C.

Les compositions phytosanitaires conformes à l'invention comprennent 48 à 450 g/l d'oxynil et peuvent être présentées sous la forme de :

- suspensions concentrées,
- concentrés émulsionnables,
- émulsions aqueuses,
- solutions vraies,
- émulsions de type huileux.

La composition phytosanitaire conforme à l'invention peut comprendre, outre la combinaison d'un oxynil et d'au moins une substance liquide à température ambiante, un ou plusieurs agents de surface de type ionique ou non ionique ainsi qu'un diluant.

Les agents de surface peuvent être choisis parmi les agents de surface non ioniques et anioniques cités dans la publication annuelle (North American Edition et International Edition) éditée par McCutcheon's Division MC Publishing Company et relative aux "Emulsifiers & Detergents" ou dans l'index des surfactants publié par B. Parant chez D.T.A. (France).

Les agents de surface non ioniques utilisables sont ceux provenant de la condensation d'une ou plusieurs moles d'oxyde d'éthylène et/ou de propylène avec des alcools courts ou gras, des alcoylphénols, des amines grasses, des amides gras, des polystyrylphénols.

Les agents de surface anioniques comprennent les alcoylarylsulfonates sous forme de sels de métaux alcalins, alcalino-terreux ou d'alcanolamines, les savons, les esters phosphoriques des agents de surface non ioniques cités précédemment, les polynaphtylméthanes-polysulfonates et leurs dérivés alcoylés, les lignosulfonates et les polymères présentant plusieurs fonctions carboxyliques.

Le diluant est choisi dans le groupe comprenant l'eau, l'acétophénone, la cyclohexanone, l'isophorone, le toluène, le xylène, le diméthyl-sulfoxyde (ou DMSO); on souligne que, dans la mesure où ils sont liquides, les agents de surface, anioniques ou non ioniques, peuvent également servir de diluants.

La composition phytosanitaire conforme à l'invention peut comprendre, de plus, des adjuvants tels que des agents protecteurs, des agents de pénétration, des agents stabilisants, des agents réducteurs de volatilité, des séquestrants, des colorants, et des inhibiteurs de corrosion; il est à noter que, dans certains cas, ces adjuvants peuvent également servir de diluants.

Pour préparer la composition phytosanitaire conforme à l'invention à partir d'un concentré liquide, on peut avoir recours aux diluants identifiés ci-dessus.

Il est intéressant de disposer d'un concentré se présentant sous forme auto-émulsionnable contenant en combinaison un oxynil et au moins l'une des susdites substances liquides à température ambiante dissous dans un agent émulsifiant ou dans un solvant; en préparant à partir d'un tel concentré la composition phytosanitaire par addition d'eau, on obtient un produit liquide conforme à l'invention prêt à l'emploi.

Enfin l'utilisation de bouillies prêtes à l'emploi contenant le ou les constituants actifs à la concentration nécessaire à l'obtention de résultats biologiques fait également partie de l'invention.

Le procédé de mise en oeuvre des compositions phytosanitaires conformes à l'invention est caractérisé par le fait qu'on applique sur la culture à traiter, par pulvérisation, lesdites compositions phytosanitaires en une quantité suffisante pour amener, par hectare de culture traitée, de 48 à 450 grammes d'oxynil.

On peut réaliser l'application sur le terrain de la composition phytosanitaire conforme à l'invention selon des techniques classiques utilisant, par exemple, des pulvérisateurs à pompe à main, à moteur ou à pression préalable, équipés de rampes ou de lances servant à l'application, bien connus de l'homme de l'art.

Ci-après, on indique les produits ou les groupes de produits parmi lesquels sont choisies les substances liquides à température ambiante aptes à maintenir l'oxynil à l'état liquide sur le site d'application, après l'avoir amené, s'il y a lieu, à l'état liquide, ainsi que leurs dosages retenus pour la mise en oeuvre des compositions phytosanitaires conformes à l'invention.

Les substances liquides à température ambiante entrant dans la constitution de la composition conforme à l'invention sont désignées ci-après soit par leurs noms chimiques, soit par leurs noms communs, dans ce dernier cas les noms chimiques correspondants se trouvent dans "The Pesticide Manual", 9ème édition, publié par The British Crop Protection Council.

Les herbicides sont choisis parmi :

- les S-benzyl-thiolcarbamates comprenant le thiobencarbe, l'orbencarbe, le thiocarbazil, le prosulfocarbe et l'esprocarbe, utilisés pour la préparation des compositions phytosanitaires conformes à l'invention en une quantité telle que le rapport herbicide/ioxynil est inférieur à 2,5,

- les S-alkyl-thiolcarbamates comprenant l'EPTC, le pébulate, le cycloate, le butylate, le vernolate, le diallate, le triallate et le molinate, utilisés pour la préparation des compositions phytosanitaires conformes à l'invention à une concentration de 200 à 970 g/l et mis en oeuvre sur le site d'application à raison de 10 à 2000 g/ha, et de préférence 50 à 1000 g/ha.

Dans le procédé selon l'invention, on a recours à la composition phytosanitaire comprenant un S-benzyl-thiolcarbamate choisi dans le groupe comprenant le thiobencarbe, l'orbencarbe, le thiocarbazil, le prosulfocarbe et l'esprocarbe en une quantité suffisante pour en apporter 10 à 2000 g/ha et de préférence 50 à 1000 g/ha.

Les exemples qui suivent permettront de mieux comprendre l'invention; ils sont donnés à titre illustratif en rapport avec des modes de réalisation avantageux.

**EXEMPLE 1 : <u>Composition à base d'octanoate d'ioxynil et de prosulfocarbe</u>**

On a préparé une composition phytosanitaire conforme à l'invention sous la forme d'un concentré émulsionnable comprenant :

- 192 g/l d'octanoate d'ioxynil

     et

- 480 g/l de prosulfocarbe

que l'on a appliquée par pulvérisation à raison de 0,5 l/ha sur les plantes de *Chenopodium album, Galium aparine* et *Veronica sp.* en pots, au stade 3-4 feuilles aux doses indiquées dans le tableau I.

Après 21 jours, on a observé l'effet herbicide de cette composition sur les espèces traitées.

Les résultats de cet essai ont été récapitulés dans le tableau I.

On a appelé "Résultats attendus", le pourcentage de destruction des plantes visées calculé par addition de l'effet de l'oxynil appliqué seul (X) d'une part, et de l'effet de la substance liquide à température ambiante appliquée seule (Y) d'autre part, compte tenu de leurs doses d'application respectives, selon la formule :

$$X + Y - \frac{XY}{100}$$

X et Y représentant des pourcentages de destruction des plantes traitées observés par rapport à un témoin non traité pour lequel la destruction des plantes est considérée comme étant de 0%, observation faite 21 jours après le traitement.

On a appelé "Résultats obtenus", le pourcentage de destruction des plantes traitées obtenu par rapport à un témoin non traité pour lequel la destruction desdites plantes est considérée comme étant de 0%.

Il y a un effet synergique entre l'oxynil et la matière liquide à température ambiante, présents en combinaison dans les compositions phytosanitaires conformes à l'invention, chaque fois que les résultats obtenus sont supérieurs aux résultats attendus.

TABLEAU I

|  | Résultats obtenus (%) après application individuelle des constituants de la composition | | Résultats attendus (%) | Résultats obtenus (%) |
|---|---|---|---|---|
| Octanoate d'ioxynil (g/ha) | 96 | 0 | 96 | 96 |
| Prosulfocarbe (g/ha) | 0 | 240 | 240 | 240 |
| Chenopodium album | 15 | 0 | 15 | 100 |
| Galium aparine | 35 | 10 | 42 | 55 |
| Veronica sp. | 50 | 0 | 50 | 75 |

Il résulte de ce tableau qu'un effet de synergie se produit entre l'octanoate d'ioxynil et le prosulfocarbe.

**EXEMPLE 2 : Composition à base d'octanoate de bromoxynil et de prosulfocarbe**

On a préparé trois compositions phytosanitaires conformes à l'invention sous forme de concentrés émulsionnables dont les formulations respectives sont indiquées dans le tableau II :

**TABLEAU II**

|  | Octanoate de bromoxynil (g/l) | Prosulfocarbe (g/l) |
|---|---|---|
| Composition 1 | 100 | 240 |
| Composition 2 | 200 | 240 |
| Composition 3 | 200 | 480 |

On a appliqué chacune de ces compositions par pulvérisation à raison de 1 l/ha sur les plantes de *Cheno-*

podium album et Galium aparine en pots au stade 3-4 feuilles aux doses indiquées dans le tableau III.

Après 21 jours, on a observé l'effet herbicide de la composition 1 sur *Chenopodium album* et sur *Galium aparine* et les effets herbicides des compositions 2 et 3 sur *Chenopodium* album uniquement.

Les résultats de ces essais sont récapitulés dans le tableau III.

Les "Résultats attendus" et "Résultats obtenus" sont tels que définis dans l'exemple 1.

### TABLEAU III

| | Résultats obtenus (%) après application individuelle des constituants de la composition | | | | Résultats attendus (%) pour les compositions | | | Résultats obtenus (%) pour les compositions | | |
|---|---|---|---|---|---|---|---|---|---|---|
| | | | | | 1 | 2 | 3 | 1 | 2 | 3 |
| Octanoate bromoxynil (g/ha) | 100 | 200 | 0 | 0 | 100 | 200 | 200 | 100 | 200 | 200 |
| Prosulfocarbe (g/ha) | 0 | 0 | 240 | 480 | 240 | 240 | 480 | 240 | 240 | 480 |
| Chenopodium album | 0 | 55 | 0 | 5 | 0 | 55 | 57 | 70 | 95 | 100 |
| Galium aparine | 40 | 75 | 10 | 13 | 46 | - | -* | 70 | - | - |

\* indique que l'essai n'a pas été réalisé sur l'espèce et aux doses concernées

Il résulte de ce tableau qu'un effet de synergie se produit entre l'octanoate de bromoxynil et le prosulfocarbe.

**EXEMPLE 3 : Composition à base d'octanoate d'ioxynil et de diallate**

On a préparé quatre compositions phytosanitaires conformes à l'invention sous la forme de concentrés émulsionnables dont les formulations respectives sont indiquées dans le tableau IV.

### TABLEAU IV

| | Octanoate d'ioxynil (g/l) | Diallate (g/l) |
|---|---|---|
| Composition 1 | 192 | 200 |
| Composition 2 | 192 | 400 |
| Composition 3 | 96 | 400 |
| Composition 4 | 48 | 400 |

On a appliqué chacune de ces compositions par pulvérisation à raison de 0,5 - 1 - 1 et 2 l/ha respectivement sur des plantes de *Chenopodium album, Galium aparine* et *Matricaria inodora* en pots, au stade 3-4 feuilles aux doses indiquées dans le tableau V.

Après 21 jours, on a observé l'effet herbicide de chacune des compositions sur les espèces traitées.

Les résultats de ces essais sont récapitulés dans le tableau V.

Les "Résultats attendus" et "Résultats obtenus" sont tels que définis dans l'exemple 1.

**TABLEAU V**

| | Résultats obtenus (%) après application individuelle des constituantsde la composition | Résultats attendus (%) pour les compositions | | | | Résultats obtenus (%) pour les compositions | | | |
|---|---|---|---|---|---|---|---|---|---|
| | | 1 | 2 | 3 | 4 | 1 | 2 | 3 | 4 |
| Octanoate d'ioxynil (g/ha) | 96 0 0 0 0 | 96 | 96 | 96 | 96 | 96 | 96 | 96 | 96 |
| Diallate (g/ha) | 0 100 200 400 800 | 100 | 200 | 400 | 800 | 100 | 200 | 400 | 800 |
| Chenopodium album | 40 0 0 0 0 | 40 | 40 | 40 | 40 | 55 | 95 | 100 | 100 |
| Galium aparine | 60 5 10 5 5 | 62 | 64 | 62 | 62 | 85 | 80 | 85 | 93 |
| Matricaria inodora | 20 0 0 0 0 | 20 | 20 | 20 | 20 | 45 | 40 | 35 | 30 |

Il résulte de ce tableau qu'un effet de synergie se produit entre l'octanoate d'ioxynil et le diallate.

**EXEMPLE 4 : Composition à base d'octanoate de bromoxynil et de molinate**

On a préparé quatre compositions phytosanitaires conformes à l'invention sous la forme de concentrés émulsionnables dont les formulations respectives sont indiquées dans le tableau VI.

**TABLEAU VI**

| | Octanoate de bromoxynil (g/l) | Molinate (g/l) |
|---|---|---|
| Composition 1 | 192 | 400 |
| Composition 2 | 96 | 400 |
| Composition 3 | 48 | 400 |
| Composition 4 | 48 | 800 |
| Composition 5 | 192 | 400 |
| Composition 6 | 96 | 400 |
| Composition 7 | 48 | 400 |

On a appliqué par pulvérisation :

- les compositions 1 à 4 à raison de 0,25 - 0,5 - 1 et 1 l/ha respectivement, sur des plantes d'*Amaranthus sp.* en pots et
- les compositions 2 à 7, à raison de 0,5 - 1 - 1 - 0,5 - 1 et 2 l/h respectivement, sur des plantes de *Chenopodium album* et sur *Galium aparine* en pots, au stade 3-4 feuilles aux doses indiquées dans le tableau VII.

Après 21 jours on a observé l'effet herbicide de chacune des compositions sur les espèces traitées.

Les résultats de ces essais sont récapitulés dans les tableaux VII A et VII B.

Les "Résultats attendus" et "Résultats obtenus" sont tels que définis dans l'exemple 1.

## TABLEAU VII A

| | Résultats obtenus (%) après application <u>individuelle</u> des constituants de chaque composition | | | | | |
|---|---|---|---|---|---|---|
| Octanoate de bromoxynil (g/ha) | 48 | 96 | 0 | 0 | 0 | 0 |
| Molinate (g/ha) | | 0 | 0 | 100 | 200 | 400 | 800 |
| <u>Amaranthus sp.</u> | 55 | - | 0 | 0 | 0 | 0 |
| <u>Chenopodium album</u> | 0 | 0 | - | 0 | 0 | 0 |
| <u>Galium aparine</u> | 25 | 30 | - | 0 | 0 | 0 |

## TABLEAU VII B

| | Résultats attendus (%) pour les compositions | | | | | | | Résultats obtenus (%) pour les compositions | | | | | | |
|---|---|---|---|---|---|---|---|---|---|---|---|---|---|---|
| | 1 | 2 | 3 | 4 | 5 | 6 | 7 | 1 | 2 | 3 | 4 | 5 | 6 | 7 |
| Octonoate de bromoxynil (g/ha) | 48 | 48 | 48 | 48 | 96 | 96 | 96 | 48 | 48 | 48 | 48 | 96 | 96 | 96 |
| Molinate (g/ha) | 100 | 200 | 400 | 800 | 200 | 400 | 800 | 100 | 200 | 400 | 800 | 200 | 400 | 800 |
| <u>Amaranthus sp.</u> | 55 | 55 | 55 | 55 | - | - | - | 75 | 70 | 75 | 75 | - | - | - |
| <u>Chenopodium album</u> | - | 0 | 0 | 0 | 0 | 0 | 0 | - | 15 | 60 | 60 | 30 | 55 | 85 |
| <u>Galium aparine</u> | - | 25 | 25 | 25 | 30 | 30 | 30 | - | 35 | 83 | 90 | 50 | 50 | 70 |

Il résulte de ce tableau qu'un effet de synergie se produit entre l'octanoate de bromoxynil et le molinate.

## Revendications

1. Composition phytosanitaire herbicide liquide, **caractérisée par le fait qu'**elle comprend en combinaison un oxynil et au moins une substance choisie parmi les herbicides du groupe comprenant les S-alkyl- et les S-benzyl-thiolcarbamates, cette substance étant liquide à température ambiante, étant entendu que, dans le cas où ladite substance est un S-benzyl-thiolcarbamate choisi dans le groupe comprenant le thiobencarbe, l'orbencarbe, le thiocarbazil, le prosulfocarbe et l'esprocarbe, le rapport S-benzyl-thiolcarbamate/ioxynil est inférieur à 2,5.

**2.** Composition phytosanitaire selon la revendication 1, **caractérisée par le fait qu'**elle comprend de 48 à 450 grammes d'un oxynil par litre.

**3.** Composition phytosanitaire selon l'une des revendications 1 et 2, **caractérisée par le fait que** l'herbicide est choisi parmi les S-alkyl-thiolcarbamates comprenant l'EPTC, le pébulate, le cycloate, le butylate, le vernolate, le diallate, le triallate et le molinate.

**4.** Procédé de traitement herbicide, **caractérisé par le fait qu'**on applique sur la culture à traiter par pulvérisation la composition phytosanitaire selon l'une des revendications 1 à 3 en une quantité suffisante pour amener, par hectare de culture traitée, de 48 à 450 grammes d'oxynil.

**5.** Procédé selon la revendication , **caractérisé par le fait que** l'on a recours à la composition phytosanitaire comprenant un S-benzyl-thiolcarbamate choisi dans le groupe comprenant le thiobencarbe, l'orbencarbe, le thiocarbazil, le prosulfocarbe et l'esprocarbe en une quantité suffisante pour en apporter 10 à 2000 g/ha et de préférence 50 à 1000 g/ha.

**Patentansprüche**

**1.** Herbizides flüssiges Pflanzenschutzmittel,
**dadurch gekennzeichnet,**
**dass** es eine Kombination aus einem Oxynil und mindestens einer Substanz, ausgewählt aus den Herbiziden der Gruppe, umfassend die S-Alkyl- und S-Benzylthiolcarbamate umfasst, wobei die Substanz bei Raumtemperatur flüssig ist, mit der Massgabe, dass im Falle, wenn die besagte Substanz ein S-Benzylthiolcarbamat ist, welches aus der Gruppe gewählt wird, die Thiobencarbe, Orbencarbe, Thiocarbazil, Prosulfocarbe und Esprocarbe enthält, das Verhältnis S-Benzylthiolcarbamat/Ioxynil kleiner 2,5 ist.

**2.** Pflanzenschutzmittel nach Anspruch 1,
**dadurch gekennzeichnet,**
**dass** es 48 bis 450 Gramm eines Oxynils pro Liter enthält.

**3.** Pflanzenschutzmittel nach einem der Ansprüche 1 und 2,
**dadurch gekennzeichnet,**
**dass** das Herbizid aus den S-Alkylthiolcarbamaten gewählt wird, die EPTC, Pebulat, Cycloat, Butylat, Vernolat, Dialat, Triallate und Molinat umfassen.

**4.** Verfahren zur herbiziden Behandlung,
**dadurch gekennzeichnet,**
**dass** durch Pulverisation das Pflanzenschutzmittel nach einem der Ansprüche 1 bis 3 auf die zu behandelnde Kultur in einer ausreichenden Menge aufgetragen wird, so dass pro Hektar behandelter Kultur 48 bis 450 Gramm Oxynil zugeführt werden.

**5.** Verfahren nach Anspruch 4,
**dadurch gekennzeichnet,**
**dass** man auf das Pflanzenschutzmittel, das ein S-Benzylthiolcarbamat enthält, das aus der Gruppe gewählt wird, die Thiobencarbe, Orbencarbe, Thiocarbazil, Prosulfocarbe und Esprocarbe enthält, in einer ausreichenden Menge zurückgreift, so dass davon 10 bis 2000 g/ha und vorzugsweise 50 bis 1000 g/ha zugeführt werden.

**Claims**

**1.** Liquid herbicidal phytosanitary composition, **characterized in that** it comprises in combination an oxynil and at least one substance chosen from herbicides of the group comprising S-alkyl and S-benzyl-thiolcarbamates, this substance being liquid at ambient temperature, it being understood that, in the case where the said substance is an *S*-benzyl-thiolcarbamate chosen from the group comprising thiobencarb, orbencarb, thiocarbazil, prosulfocarb and esprocarb, the S-benzyl-thiolcarbamate/oxynil ratio is less than 2.5.

**2.** Phytosanitary composition according to claim 1, **characterized in that** it contains from 48 to 450 grammes of an oxynil per litre.

3. Phytosanitary composition according to either of claims 1 or 2, **characterized in that** the herbicide is chosen from the S-alkyl-thiolcabamates comprising EPTC, pebulate, cycloate, butylate, vernolate, diallate, triallate and molinate.

4. Herbicidal treatment process, **characterized in that** the phytosanitary composition according to one of claims 1 to 3 is applied by spraying it onto the crop to be treated in a sufficient quantity to provide 48 to 450 grammes of oxynil per hectare of the crop treated.

5. Process according to claim 4, **characterized in that** use is made of the phytosanitary composition containing an S-alkyl-thiolcabamate comprising thiobencarb, orbencarb, thiocarbazil, prosulfocarb and esprocarb in a sufficient quantity to provide 10 to 2000 g/ha and preferably 50 to 1000 g/ha.